# EUROPEAN PATENT APPLICATION

(11) **EP 1 739 397 A1**
(43) Date of publication of application: **03.01.2007**
(21) Application number: 06115613.9
(22) Date of filing: 16.06.2006
(51) Int. Cl.: G01F 11/12, A47J 31/40

(54) **Dosing dispenser for powdered or granular material to be affixed to water dispensers**

(30) Priority: 01.07.2005 AR 50102765
(71) Applicant: Talleres Reunidos Italo Argentino S.A., Buenos Aires (AR)
(72) Inventor: BOSI, Mauricio Alberto, VILLA LUZURIAGA, BUENOS AIRES (AR)
(74) Representative: Robba, Pierpaolo

(57) **Abstract**

A dosing dispenser to be incorporated to water dispensers with the purpose of providing powdered material that, when mixed with water, is used for human consumption. Said dosing dispenser comprises at least one dispensing unit affixed to one lateral wall (6) of the water dispenser's structure (A) and consists of a receiving ring (13) for the powdered material container, which is placed and fixed in an inverted position, facing a powdered material feeding duct (16), wherein a valvular closing means is inserted and mounted on an induced arm (18) through the gib (26) that runs through the wall of the duct. Said duct is associated in one end by an expansion spring (25) to the control arm (23), which carries the stirring pin (19) plunging inside the container. The control arm in its other end is associated with a manual control knob (7) operated by the user. The receiving ring (13) is cylindrical and has an internal screw thread cooperating with the threaded bead of the powdered material container. Additionally, the valvular closing means is a disk-like plate (24) cooperating with the induced arm of the powdered material feeding duct (16). Said duct consists of two co-axial cylindrical sections (14, 16) joined by two screws (27).

## Description

The present patent application has as main object a dosing dispenser for powdered or granulated material to be mounted on a water dispenser that is specially built to be affixed to said water dispenser for improving its use and automating its service.

More particularly, the present patent application protects a dosing dispenser created for delivering powdered material which, when mixed with water, is used for human consumption. This invention is used to provide coffee, coffee with milk, or the like, as well as sugar or any powder sweetener that, when mixed with water, result in widely used beverages or infusions.

The present invention is also useful for dispensing fixed doses of soup, stock, *yerba mate,* tea, juice and similar products, all of which are provided in granules or powder specifically prepared to be consumed by users by mixing them with cold or hot water.

This invention is able to dispense fixed doses of the above-mentioned products, so that they are delivered to or discharged on a cup or glass, in such a way that the user can mix it with the water provided by the water dispenser and then stir it in order to obtain the desired beverage.

The present invention has been specially designed to be affixed to the body of cold and hot water dispensers that are already known in the art, so as to give the users the option of preparing their own beverage by using a single machine.

The present invention protects the combination of means defined in the dosing device, which is used associated to water dispensers.

### PRIOR ART

Several water dispensers are known in the art. These can be found in several places for public use, such as offices, shops, gasoline pumping stations, waiting rooms, etc. These dispensers provide cold and hot water for human use, in such a way that the users may drink it or use it for making beverages, infusions, soups, juices, or the like in a fast and simple manner.

Said dispensers are usually built as a structure over which a drinking water container is placed. This container feeds a first internal circuit for cold water conduction which includes an electric cooling device and a second circuit for hot water conduction where a boiler is placed. Both circuits end in two dispensing faucets placed in a way that users can easily handle the manual delivery command.

In some cases, said widely known dispensers are connected directly to water pipes, in which cases the water container is not included. In this case, the dispenser works as a water-cooling and heating machine.

Finally, the use of said dispensers has remarkably increased due to flaws in the water of big cities and also because of the benefit of having cold and hot water for immediate use.

However, there are no known machines in the art that would provide, additionally to water, powdered products in a direct or associated manner. All known machines only dispense water and then the user must add the desired powdered product to the water.

There are other machines that are usually placed in stores, factories and offices, particularly created for a single purpose. These machines dispense fixed doses of powdered coffee mixed with hot water.

Although said machines are useful for delivering the desired product, they usually have service problems that make them not completely reliable. On a frequent basis, said machines leave, with each dose, rests of material in the feeding tube that communicates with the receiving cup. After several uses, it is usually necessary to disassemble the equipment and clean the feeding tubes, since rests of coffee or other powder are accumulated and stuck against the walls of the tube, preventing its normal functioning.

The feeding tube for the powdered material is quite long and its outlet is somewhat excessively separated from the receiving cup, and is therefore not safe. In addition, part of said material is usually delivered outside said cup, with the consequent loss of the product supplied.

Also, there are no other existing dispensing devices or equipments of powdered materials in the art that may be affixed to the body of the water dispensing equipment, thus avoiding the duplication of machines in a convenient fashion.

### NOVELTY - MAIN OBJECT OF THE INVENTION

The powdered material dispenser of the present application solves the above-mentioned problem since it is built in such a way that it guarantees that all the material delivered in each dosing action enters the cup without unwanted spills and leaving no trace of the powder in the discharge duct.

The present invention has been designed to be affixed to the external face of one lateral wall of the water dispenser, and therefore no modification to the dispenser is required to install the dosing dispenser.

The present invention has also been designed to make use of the powdered material as commercially available, in its original packaging such as bottles or jars with a screw lid, all of which have a bead with an external thread that cooperates with the internal thread of the closing lid.

The consumer buys the powder product in any market, removes the lid and places the bottle in the dispenser, in an inverted position, rotating it until the bead is fixed in the receiving threaded ring of the dispenser. From said position, the powdered material contained in the bottle is retained by a rotating valvular plate provided by the dispenser that serves as a new closing lid.

Said rotating valvular plate is associated to a manual control knob to be handled by the user that allows a dose of the material to be discharged within the receiving cup. As a consequence, the user chooses the desired number of doses, according to the granules of each product, to be mixed with water.

The present invention also provides threaded adapters which, once fixed in the dispenser's receiving ring, allow for the engagement of bottles or jars with smaller beads or threads of different sizes. This way, the user can grab a cup, place it beneath the powder delivery outlet and move the control knob to obtain one o more doses as preferred. Then with the same cup filled with the powdered material, the user places it under the cold or hot water faucet and finishes the mix.

The present invention makes it possible to affix more than one dosing dispensers to the water dispenser, and this way the user can obtain different powdered materials in order to combine them, such as a coffee container and a milk container, or in order to use them separately. The dosing units can be placed altogether in a single block affixed to the walls of the dispenser or they can be divided in two separate blocks on opposed walls of the dispenser. In both cases, it is possible to use the dosing dispenser for hot beverages such as coffee and soups and cold beverages such as fruit juices.

The main object of the present patent application is a dosing dispenser of powdered or granular material to be affixed to water dispensers. It comprises at least one dispensing unit that is affixed to a lateral wall of the water dispenser and consists of a receiving ring for the powdered material container, which is placed in an inverted position, facing a powder feeding duct, where a valvular closing means is mounted on a rotating control arm that crosses the wall of said duct. Said arm is driven by an expansion spring joined to the axis and also joined in one of its ends to a manual control knob to be handled by the user, the arm carries a stirring pin that is projected inside the powder container.

The receiving ring is a cylindrical and hollow body with an internal thread that cooperates with the threaded bead of the powdered material container, which is placed in its inverted position.

The valvular closing means is a disk-like plate cooperating with the control arm through a gib with a diameter equal to the internal diameter of the powdered material feeding duct.

The rotating control arm that crosses the wall of the duct associated with the manual control knob is in turn associated with the induced arm with the placement of an expansion spring rendering a tendency to the valvular closing.

The control arm and the induced arm are bended arms that cross the cylindrical body defining the feeding duct and are connected one to the other by their free ends, with the insertion of an expansion spring.

The feeding duct has two co-axial cylindrical segments.

The dispenser of the invention can include a plurality of dispensing units on at least one of the lateral walls of the water dispenser's structure, these units being covered by a hinged lid with front openings for the manual control knobs.

The delivery outlet of the powder feeding duct faces the upper part of the cup from a very short distance. The cup is supported on a tray that is cantilevered from the dispenser's front wall.

### BRIEF DESCRIPTION OF THE DRAWINGS

In order to show the above-mentioned advantages, and any other advantage or benefit conceived by the users or persons with ordinary skills in the art, and also for a better understanding of the main construction, constitutional and functional features of the powdered material dosing dispenser, here follows an example of a preferred embodiment illustrated schematically and not in scale in the attached drawings. However, since it is only an example and does not limit the scope of protection of the present patent application, it only has illustrative and description purposes.

Figure 1 is a perspective view illustrating a water dispenser with the powdered material dosing dispenser affixed to it as described in this application.

Figure 2 is a perspective view of the dosing dispenser with the lid open to show how it is mounted on or affixed to the water dispenser.

Figure 3 is a front schematic view illustrating the dispensing unit from the manual control knob.

Figure 4 is a perspective view also illustrating the dispensing unit but in this case from the opposing view.

Figure 5 is a perspective view of the dispensing unit from below.

Figure 6 is a perspective view of a thread adapter to be included as an accessory of the dispenser of the invention.

Figure 7 is a upper perspective view of the dispensing unit.

Figure 8 is a perspective view of the dispensing unit from a front, internal and upper view.

Figure 9 is an internal and lower perspective view of the dispensing unit.

All references in the drawings correspond to the references in the specification according to the example chosen to describe the dosing dispenser of the invention.

### DETAILED DESCRIPTION OF A PREFERRED EMBODIMENT

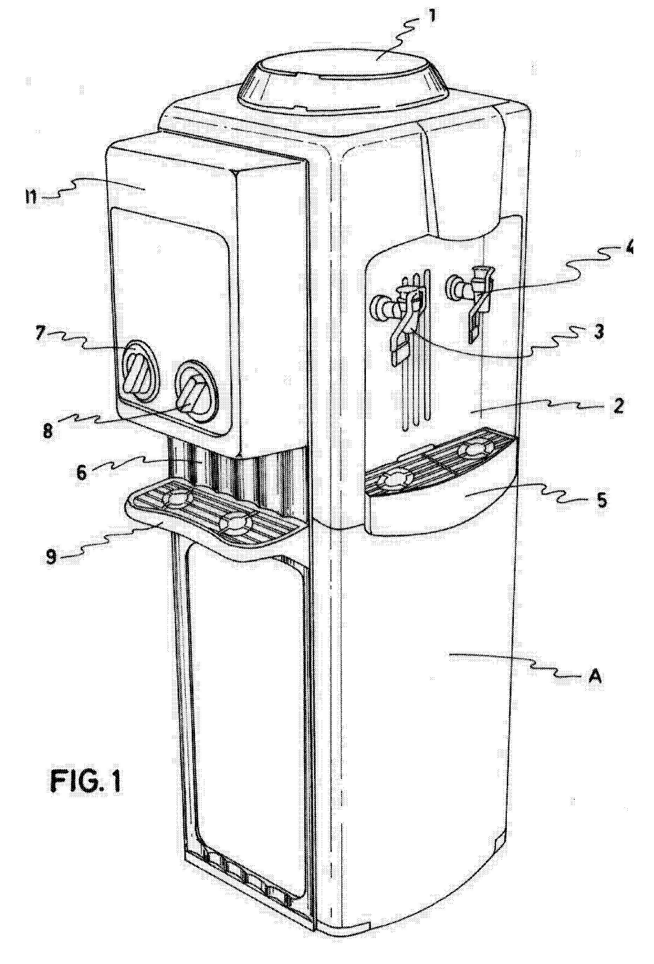

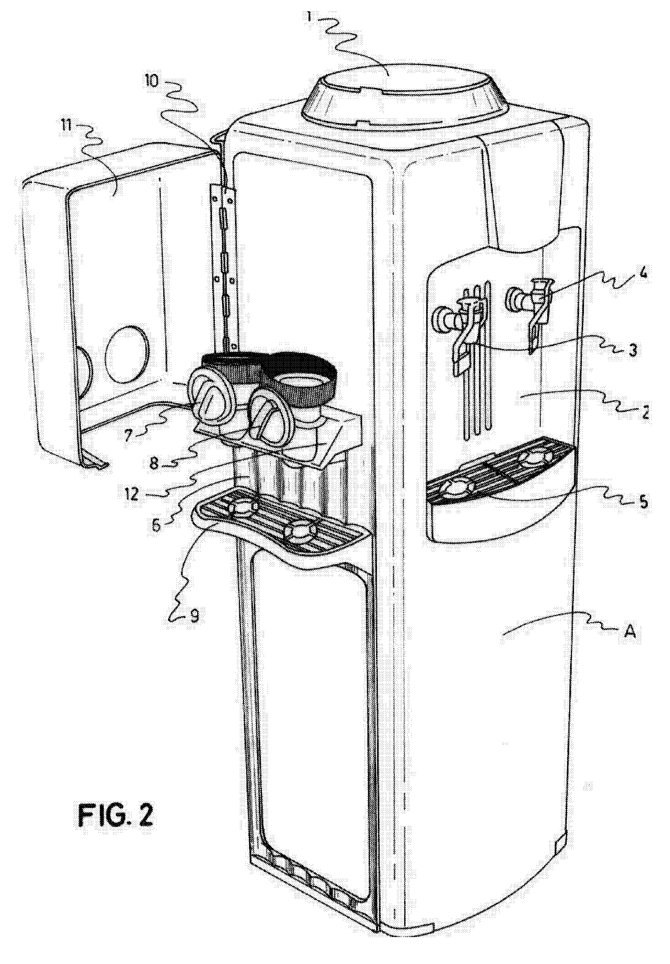

As shown in figures 1 and 2, the dosing dispenser of the present patent application can be affixed to widely known water dispensers
(A) of the kind including a prismatic structure with an upper basis (1) that receives the replaceable drinking water container (not shown), and a front surface with a wide cavity (2) housing one hot water faucet (3), one cold water faucet (4) and a lower spillage collector (5) also acting as a cup supporting surface.

Figures 1 and 2 also show the water dispenser (A) with a powdered material dispenser as described in this application. Said dispenser is affixed to the lateral wall (6) and protrudes from the surface of the dispenser.

In the preferred embodiment, the powdered material dispenser comprises two dispensing units controlled by means of the knobs (7,8) and a lower tray (9) to support the cup in a cantilever fashion.

As shown specifically in figure 2, the dosing dispenser of the invention can be mounted on a lateral wall (6) of the water dispenser (A). This can be accomplished by securing the hinge (10) with rivets or screws to support the lid (11), and securing the support (12) that protrudes from the dispenser wall to support the powdered material dispensing units.

As also shown in figure 2, each powdered material dispensing unit consists of a receiving ring (13) that is internally threaded and is designed to support each powdered material container in an inverted position (upside down) with its bead threaded to said ring. This way, the material within each container has a tendency to be discharged and permanently feed each dispensing unit.

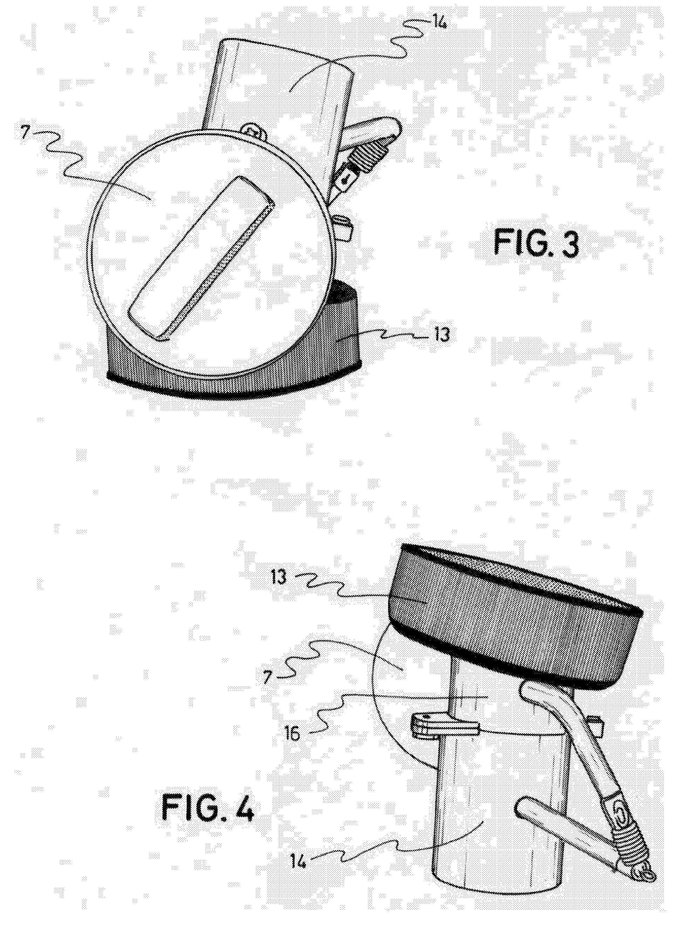

As shown in figures 3 and 4, it can be understood that each dispensing unit basically comprises the above-mentioned receiving ring (13) to place each container (not shown) that feeds the powdered material to the delivery outlet facing the receiving cup from a very short distance, said cup being supported by the tray (9). The passage of powdered material through the internal duct (16) of the tube (14) and to the cup includes the placement of a dosing valvular means that is manually controlled by means of the knob (7).

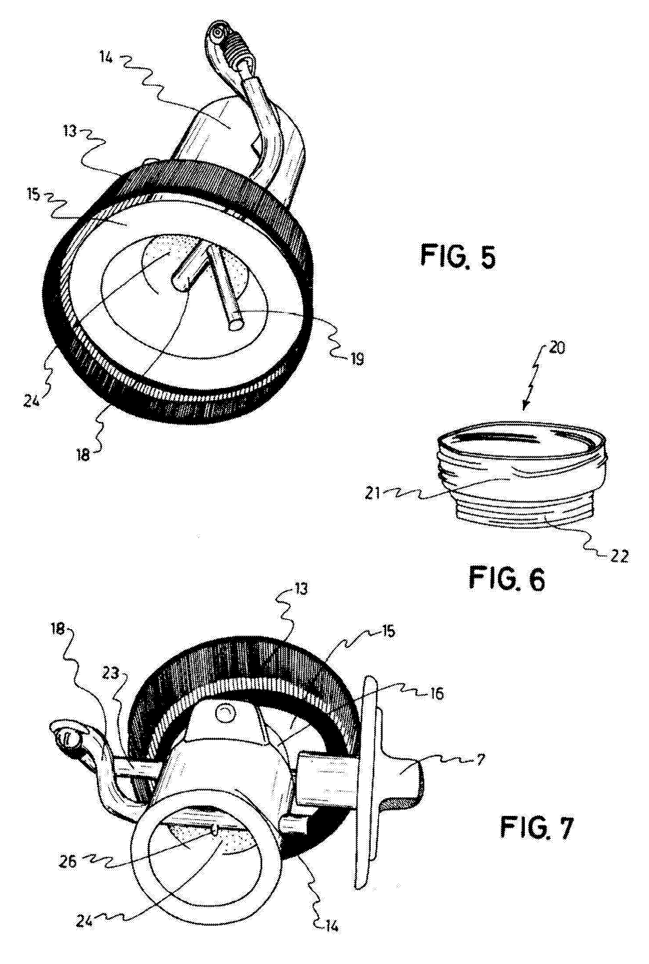

As shown in figures 5 and 7, the inverted container must rest over the ring flange (15) so that the powdered material can enter the internal duct (16), which is crossed by the induced arm (18) that carries the disk-like plate (24) and maintains the powdered material ready to fall due to gravity towards the internal duct (16).

Figure 6 illustrates an adapter (20) having a first cylindrical section with a screw thread (21) that engages with the ring (13) and a second section (22) with a diameter smaller that the first section, designed to receive containers with a cooperating threaded bead allowing containers to be placed in an inverted position and ready to use.

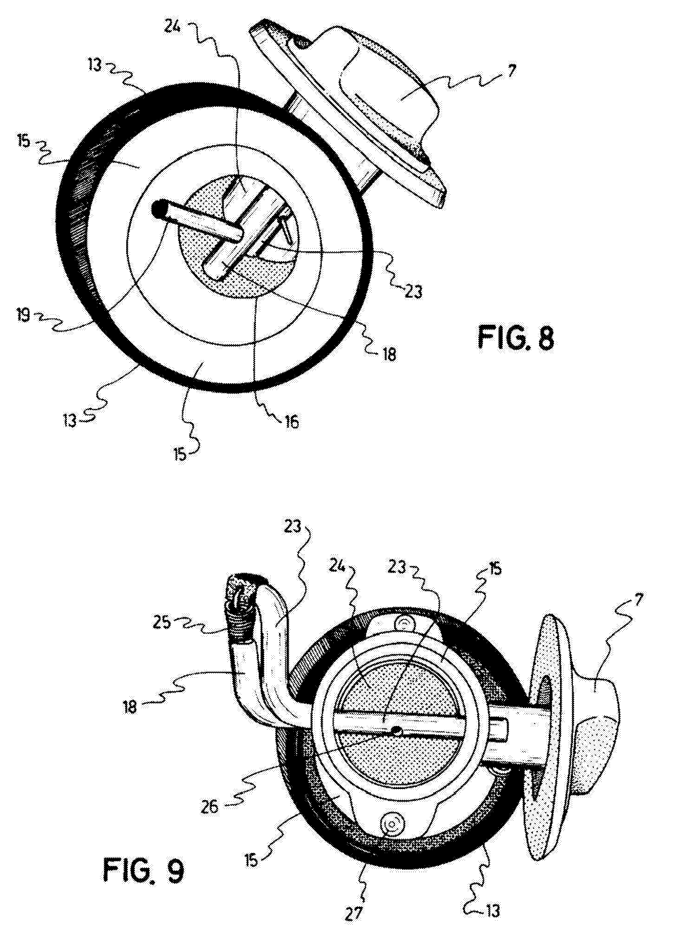

Figures 8 and 9 illustrate a free end of the induced arm (18) carrying the disk-like plate (24), associated with the control arm 23 and extending up to the knob (7), said association being accomplished by means of an expansion spring (25) which maintains an elastic tendency towards the valvular closure.

The disk-like plate (24) is the valvular means that, controlled through the knob (7), causes the opening or closure of the internal duct (16), allowing or preventing the passage of material to the cup. In other words, when the user rotates the knob (7), he/she rotates the control arm (23), which in turn drives the induced arm (18) by means of the expansion spring (25), thus opening the valvular means (24) that is fixed by the gib (26).

The doses are pre-determined according to the internal diameter of the duct (16) and the diameter of the disk-like plate (24).

At the same time, the same control arm (23) produces the movement of the stirring pin (19) plunged in the material to be delivered through its free end, by means of the spring (25) causes the induced arm (18) to rotate, moving the disk-like plate (24).

The tube (14) is coaxially assembled with the duct (16) by means of two screws (27) and is crossed by the induced arm (18), while the duct (16) is crossed by the control arm (23) associated with the knob (7), said tube (14) being inserted into the support (12).

## Claims

1. A dosing dispenser for powdered or granular material to be affixed to water dispensers with the purpose of providing powdered material that, when mixed with water, is used for human consumption, the dispenser comprising at least one dispensing unit affixed to a lateral wall (6) of the water dispenser's structure (A) and consisting of a receiving ring (13) for the powdered material container, which is placed and fixed in an inverted position, facing the powdered material feeding duct (16), wherein a valvular closing means (24) is inserted and mounted on an induced arm (18) that runs through the wall of the feeding duct (16), which is driven in its end by an expansion spring (25) attached in its other end to the rotating control arm (23) that carries the stirring pin (19); said rotating control arm (23) that runs through the feeding duct (16) is associated in its other end to a manual control knob (7) to be operated by the user.

2. The dosing dispenser for powdered or granular material to be affixed to water dispensers according to claim 1, wherein the receiving ring (13) is cylindrical and has an internal thread screw that cooperates with the threaded bead of the powdered material container placed in an inverted position.

3. The dosing dispenser for powdered or granular material to be affixed to water dispensers according to claim 1, wherein the valvular closing means is a disk-like plate (24) cooperating with the induced arm (18), with a diameter equal to the internal diameter of the powdered material feeding duct (16).

4. The dosing dispenser for powdered or granular material to be affixed to water dispensers according to claim 1, wherein the rotating control arm (23), that runs through the wall of the duct (16) associated with the manual control knob (7), is attached to the induced arm (18) with the insertion of an expansion spring (25) that provides a tendency to the valvular closure (24).

5. The dosing dispenser for powdered or granular material to be affixed to water dispensers according to claim 1, wherein the rotating control arm (23) and the induced arm (18) are bent arms that run through the cylindrical body defining the feeding duct (16) and are joined by their respective free ends, with the insertion of an expansion ring (25).

6. The dosing dispenser for powdered or granular material to be affixed to water dispensers according to claim 1, wherein the feeding duct consists of two co-axial cylindrical sections (14, 16).

7. The dosing dispenser for powdered or granular material to be affixed to water dispensers according to claim 1, wherein the dispenser includes a plurality of dispensing units placed on at least one of the lateral walls of the water dispenser's structure, the units being covered by a lid (11) that is hinged to the lateral wall and has front openings for the manual control knobs.

8. The dosing dispenser for powdered or granular material to be affixed to water dispensers according to claim 1, wherein the delivery outlet of the powdered material feeding duct of each dispensing unit faces from a very short distance the upper part of the receiving cup, which is supported by the cantilevered tray (9) on the water dispenser's structure.

9. The dosing dispenser for powdered or granular material to be affixed to water dispensers according to claim 1, wherein the receiving ring (13) is coupled by screw threading with a cylindrical adapter (20) with a diameter that is equal to the diameter of the container.
